# EUROPEAN PATENT APPLICATION

(11) **EP 1 947 404 A2**
(43) Date of publication of application: **23.07.2008**
(21) Application number: 06820004.7
(22) Date of filing: 28.09.2006
(51) Int. Cl.: F24J 3/06, F24F 5/00

(54) **SYSTEM FOR USING, CONTROLLING AND REGULATING RENEWABLE ENERGIES IN SELF-SUFFICIENT BUILDINGS**

(30) Priority: 28.09.2005 ES 200502347
(71) Applicant: UNIVERSIDAD POLITECNICA DE MADRID, 28040 Madrid (ES)
(72) Inventor: CAAMAÑO MARTÍN, Estefanía, 28040 Madrid (ES); NEILA GONZÁLEZ, Javier, 28040 Madrid (ES); EGIDO AGUILERA, Miguel Ángel, 28040 Madrid (ES); JIMÉNEZ LEUBE, Javier, 28040 Madrid (ES); MAGDALENA LAYOS, Luis, 33600 Mieres (Asturias) (ES); BEDOYA FRUTOS, César, 28040 Madrid (ES); GARCÍA SANTOS, Alfonso, 28040 Madrid (ES)
(74) Representative: Carvajal y Urquijo, Isabel
(86) International application number: PCT/ES2006/000543
(87) International publication number: WO 2007/036587

(57) **Abstract**

This invention consists of an integrated system to capture, accumulate, regulate and distribute energy in a building, without the need to use the grid energy but rather by reusing the renewable energy sources available in the ambient conditions that surround and constitute the building (fresh air, ambient humidity, ...).

The system first captures energy for cooling or heating, which it captures from the air by suction with fans through windows in the wall and openings in the base of the floor. This energy passes through some gels that change from solid to liquid state and accumulate the energy by phase change. The system then works in reverse mode, distributing the captured energy by means of the phase change of the gels.

A computer system controls the entire system.

## Description

### TECHNICAL SECTOR TO WHICH THE INVENTION REFERS.

Air conditioning equipment.
Domotic systems.
Mechanical component actuation devices
Energy accumulators.
State change substances.
Renewable energies.
Sustainable building
Bioclimatic architecture
Environment

### PREVIOUS STATE OF THE ART.

At present there are many projects that are based on the principles of sustainability and bioclimatology. However, to succeed in making those buildings self-sufficient requires very climatically benign locations or buildings that are very singular and technologically complex.
The regulation and control systems of ambient conditioning systems are currently reserved for conventional systems. It is very rare to find these systems installed to control the functioning of the passive strategies of buildings. This patent includes the functions that can make a building self-sufficient without major technical modifications or significant cost increases, and it incorporates devices to regulate and control the passive functioning of the building.

### EXPLANATION OF THE INVENTION

It is a system that regulates the temperature, produces oxygen and absorbs contaminants (CO₂).

This invention consists of an integrated system to capture, accumulate, use, control, regulate and distribute energy in a building, without the need to use the grid energy but rather by reusing the renewable energy sources available in the ambient conditions that surround and constitute the building (fresh air, ambient humidity,...)

The system first captures energy for cooling or heating; it captures energy from the air by suction with fans through windows in the wall and openings in the base of the floor. This energy passes through some gels that change from solid to liquid state and accumulate the energy by phase change. The system then works in reverse mode, distributing the captured energy by means of the phase change of the gels. A computer system controls the entire system.

The system captures energy, distributes it to all the rooms in the building and accumulates it, both to cover the demand when there is no supply and to dampen the thermal shock represented by the capture of natural energy. The system will work 24 hours a day.

The energy to be captured is coolness, fresh air with a temperature of less than 23 °C to cool the environment on hot days, and heat to heat it when it is cold. This energy should be accumulated via the state change of gels, which are eutectic substances, i.e., mixtures of different substances which in certain proportions have a low thermal resistance (R < 0,30x10⁻³ m²·°C/W) and high thermal diffusiveness (a < 0,56x10⁶ m²/s).

These gels are located under the flooring of ceramic material (stoneware or similar) used for the floor of the building.

The freshness that will be captured is provided by the air when its temperature is lower than 23 °C. For this purpose, suction openings are provided at floor height. An intelligent system uses probes to detect the appropriate conditions (when the outside temperature is less than the inside temperature and when the former is less than 23 °C) under which energy will be used. Some suction fans will be actuated to make the air circulate through the floor and exhaust it through the opposite façade once it has given off its energy. This is the CAPTURE phase.

Heat will basically be captured from solar radiation. The intelligent system, when it detects that the air in the room is at more than 23 °C, will re-actuate the fans to send that hot air to the floor. In this case it is sent through the grilles located in the floor at one end of the building. When the air has circulated and given off its energy (heat), it exits through the grilles located in the floor of the house but at the other end, to be circulated again. This is the RECIRCULATION phase.

If the interior air conditions (content of contaminating substances) are not suitable, the air will not be recirculated but rather will be sent to the outside, establishing a permanent entrance of exterior air.

All these options of cooling, heating and ventilation are achieved by the actuation of two sets of gates combined with grilles, which are set in different positions.

The first set of gates - the exterior air intake or SUCTION gates - may be in a capture position or a recirculation position. In the first position, it will take in the exterior air and send it to the floor; it corresponds to the capture of coolness or the intake of exterior air for ventilation. In the second position, it will enable the entrance of interior air into the floor (RECIRCULATION) to maintain the hygrothermal conditions (between 21 and 24 °C).

The second set of gates - the EXHAUST gates - may be in exhaust position or recirculation position. In the first position, the captured air will be exhausted to the outside after it has circulated through the floor; it corresponds to fresh air capture. In the second position, it will enable the exit of the air from the floor towards the inside of the dwelling (RECIRCULATION) to condition the air.

A window or opening located at a high point of the roof and at the height of the first set of gates will complete the ventilation procedure to improve the quality of the interior air. The air will enter the floor from the outside and provide clean air, it will pass through the accumulating substances and be conditioned, it will enter inside the dwelling through the second set of gates located in recirculation position, and it will finally be exhausted towards the outside through the above mentioned open windows (VENTILATION).

The hygrometric control of the air is achieved with some moisture removal devices located in front of the fans. These devices consist of one or more Peltier effect tablets that will condense the excess water and discharge it to the outside through a drain pipe. They will be turned on and off by the intelligent system, which will detect the moisture content of the interior air and will relate it to that of the exterior air.

All the system devices, the two sets of gates in capture position or recirculation position, the fans either in operation or turned off, the dehumidifiers turned on or off, and the windows either open or closed, will be actuated on orders of the intelligent system, which will relate the inside conditions to the outside conditions.

In short, the system is composed of the following stages:
1. The capture of energy from the air at a temperature greater than 23 °C by suction of the exterior air to the inside of the building with fans located diametrically opposite the air intake through windows in the wall and openings in the base of the floor;
2. The air enters into the building and crosses under the floor, which should be made of a ceramic material of the stoneware type and thus with high thermal diffusiveness and effusiveness, until it comes into contact with some vessels that contain the state change substances that change from a solid to a liquid state and accumulate the phase change energy.
3. The captured energy is returned to the system when the intelligent control system, via a computer program, triggers the phase change of the gels from liquid to solid.

Following is a description of the technical characteristics of some of the system elements:
Fans:
   - The number of fans will depend on the space to be conditioned, its dimensions, location and partitions, and on the requirements demanded of the system but, in all cases, they must conform with the following:
      ■ Minimum flow: Four renewals an hour
      ■ Maximum flow: There is no upper limit
      ■ Separation between fans: Not less than one meter (measured laterally) to ensure a uniform surface current, and not more than four meters (measured in depth) to prevent an excessive load loss.
      ■ Load loss: The fans shall cover the load loss caused by crossing the spaces left by the gel capsules; it will depend on their arrangement.
      ■ The drive and suction regions of the fans shall be insulated from each other, to prevent a short-circuit from occurring with the air, when the same air that was driven is being suctioned; this can happen when the air forms pockets near the fan on hitting the gel capsules.
Gates:
   - The gates shall assure a high degree of air- and water-tightness when the lock piece changes position.
Grilles:
   - The grilles shall be sufficiently diaphanous to prevent a major load loss when the air passes through them. In combination with the fans and the gates, they shall assure:
      ■ Air outlet speed: Between 0.5 and 2.5 m/s
Dehumidifiers:
   - The dehumidifiers shall be dimensioned in terms of the outdoor ambient humidity. For a humidity of the incoming exterior air greater than 50%, it will be necessary to provide as many Peltier tablets as required to condense the following amounts of humidity:
      ■ In ventilation function: Approximately 2 g per m³ of suctioned exterior air and per 10% fraction of relative humidity above 50%, i.e.: 2 g/m³ for 60%, 4 g/m³ for 70%, 6 g/m³ for 80%, etc.
      ■ In recirculation function: Approximately 0.9 g per m³ of building per hour.
   - The device shall be dimensioned for the worst of these possibilities.
Energy accumulators:
   - The gels should very rapidly accumulate the energy they receive - solar radiation or fresh air - to prevent the losses resulting from keeping the energy in the air; therefore the vessels where they are located should have a high thermal diffusiveness:
      ■ a < 0,56x10⁶ m²/s.
   - The state change gels are composed of substances that change state at a specific temperature (23 °C) and with a high state change latent heat, and the vessels that contain them are made of any material that assures a rapid transfer of heat, e.g. any metal, and with a high form factor (greater than 40 m-1) which assures a large exchange surface. They are eutectic substances with low thermal resistance (R < 0,30x10⁻³ m²·°C/W) and high thermal diffusiveness (a < 0,56x10⁶ m²/s).
   - The gel container should be able to contain enough substance so as to accumulate all the energy it receives. If it is insufficient, it will completely change state and subsequently begin to appreciably heat up/cool down, wasting part of the advantage of state change systems and discharging at a constant temperature. Therefore a minimum amount of substance should be assured, and this will depend on the energy that may accumulate. The latter will depend on the location, the solar irradiance, the nighttime temperature of the air, the internal loads, etc:
      ■ For a continuous surface; Thickness > 10 mm for every 2x10⁶ J/m² of energy to be accumulated.
Intelligent control system:
   - The intelligent system must automate the combined operation of the different components in order to obtain the best performance from the system.
   - The intelligent system contains a computer program that records the data from temperature and relative humidity probes placed inside and outside the building and, depending on these, it actuates the system fans and gates to keep the inside building temperature stable.
   - Therefore, it shall actuate gates, fans and windows according to the following criteria:
Cooling position:
   ■ When the outside conditions are suitable for energy accumulation, i.e., outside temperature less than the state change temperature of the accumulating gels, and the inside conditions are comfortable, the system will actuate the fans and will set the gates on CAPTURE position. When the exterior air conditions are no longer favorable, i.e., the temperature is above the state change temperature of the gels, the fans will be turned off.
   ■ When the inside conditions are not comfortable, i.e., with a higher temperature, the outside conditions will first be analyzed. If the outside temperature is around the comfort temperature (±1 °C), the windows located on both sides of the house will be automatically opened to assure natural cross ventilation. If the outside temperature does not meet this requirement, the fans will be actuated and the gates will be set on RECIRCULATION position.
Heating position:
   ■ When the outside conditions are suitable for the accumulation of energy, i.e., the solar radiation strikes the capture façade, or the outside temperature is greater than the state change temperature of the accumulating gels, or the inside temperature is greater than the comfort temperature, the system will actuate the fans and will set the gates on RECIRCULATION position.
   ■ Even when none of these conditions exists, the fans will continue to function as long as the drive temperature through the exit grilles is greater than the suction temperature through the intake grilles.
Ventilation position:
   ■ If, in any of the possible situations mentioned above, the quality of the interior air is below the minimum admissible level, the gates and windows will be set on VENTILATION position.

### ONE FORM OF EXECUTION

Given the general climatic characteristics of medium altitude climates, capturing solar energy in winter must be based on the classic premise of large glassed-in surfaces oriented towards midday. To prevent solar radiation from entering during the hottest months, these openings are fully protected by projections, since the summer sun in those months is very high, and by blind sections at the ends of the dwelling that will prevent possible discomfort during the early and late hours of the day.

It is recommended that there be no openings on the east façade, since in winter there would be no capture and in summer they are not advisable, considering that the outside temperature is already high by 10 or 11 o'clock in the morning.

However, an appropriate protection would allow light to enter at dawn when the air is still conditioned by the coolness of the night.

The west façade should not have large openings but rather small holes should be provided on that part of the dwelling.

The captured energy is distributed primarily by means of a sloped roof. Its formal structure enables the hot air to move from the capturing façade to the other end of the dwelling by natural convection, stabilizing the temperature in just a few minutes.

The energy is accumulated through gels contained under the floor of the house; a current of air will charge them with energy and discharge them.

The air that enters through the window will change the state of the gels from liquid to solid state and will accumulate energy, at the same time that the house will be directly ventilated and conditioned with natural ventilation through the windows open to the prevailing winds and directed throughout the building thanks to the sloped roof.

When the outside temperature is not comfortable, the exterior openings will be closed and the interior air will be made to recirculate through the substances that have accumulated the nighttime coolness. During the rest of the day, the products will change back to solid state and give up cold to the comfort temperature (constant).

The same accumulation system is used for winter conditions. The heat captured directly through the openings or retained in the small hothouses on the south façade, together with the heat given off by the house's occupants and electronic equipment (computer, iron, printer, vacuum cleaner, etc.), will be made to circulate through the accumulation substances, which will change from solid to liquid state and will store heat at a stable temperature, the same one at which it will be recovered, when necessary, in the form of hot air.

The façades, made of ceramic material, will be composed of dry installed hollow plates that, together with the roof, will reduce any thermal effect of the radiation on the outer coating of the building.

The interior finishes should perform two functions, which are: offer to the users the warmth associated with a dwelling, and act as energy accumulators of the radiation that strikes them. The floor must be a ceramic or stone material that facilitates rapid heating, reflects radiation and converts it into light and heat.

### INDUSTRIAL APPLICATION

It may be applied to a prototype of an electrically self-sufficient single-family dwelling.

## Claims

1. Integrated energy use, control and regulation system **characterized by** the following phases:
1. The capture of energy from the air at a temperature greater than 23 °C by suction of the exterior air to the inside of the building with fans located diametrically opposite the air intake through windows in the wall and openings in the base of the floor;
2. The air enters into the building and crosses under the floor, which should be made of a stoneware type ceramic material, with low thermal resistance (R < 0,30x10⁻³ m²·°C/W) and high thermal diffusiveness (a < 0,56x10⁶ m²/s), until it comes into contact with some vessels that contain the state change substances that change from a solid to liquid state and accumulate the phase change energy.
3. The captured energy is returned to the system when the intelligent control system, via a computer program, triggers the phase change of the gels from liquid to solid.

2. Integrated energy use, control and regulation system, as per claim 1, **characterized in that** the state change gels are composed of substances that change state at a specific temperature (23 °C) and the vessels that contain them are made of any material that assures a rapid transfer of heat, e.g. any metal, and with a high form factor (greater than 40 m-1) which assures a large exchange surface.

3. Integrated energy use, control and regulation system, as per claim 1, **characterized in that** the intelligent system contains a computer program that records the data from temperature and relative humidity probes placed inside and outside the building and, depending on these, it actuates the system fans and gates to keep the inside building temperature stable.

4. Integrated energy use, control and regulation system, as per claim 1, **characterized in that** moisture removal devices formed by Peltier effect tablets are located in front of the fans, and **in that** the drive and suction regions of the fans are insulated from each other.
